# EUROPEAN PATENT SPECIFICATION

(11) **EP 3 888 985 B1**
(45) Date of publication and mention of the grant of the patent: **01.05.2024**
(21) Application number: 19903772.2
(22) Date of filing: 27.12.2019
(51) Int. Cl.: B60W 30/18, G08G 1/0967, B60W 30/09

(54) **LANE CHANGING METHOD AND SYSTEM FOR AUTONOMOUS VEHICLES, AND VEHICLE**
SPURWECHSELVERFAHREN UND SYSTEM FÜR AUTONOME FAHRZEUGE UND FAHRZEUG
PROCÉDÉ ET SYSTÈME DE COMMANDE DE CHANGEMENT DE VOIE POUR VÉHICULES AUTONOMES, ET VÉHICULE

(30) Priority: 29.12.2018 CN 201811636150
(43) Date of publication of application: 06.10.2021
(73) Proprietor: Great Wall Motor Company Limited, Hebei 071000 (CN)
(72) Inventor: HE, Lin, Baoding, Hebei 071000 (CN); ZHEN, Longbao, Baoding, Hebei 071000 (CN); CHANG, Shiwei, Baoding, Hebei 071000 (CN); ZHANG, Kai, Baoding, Hebei 071000 (CN); GE, Jianyong, Baoding, Hebei 071000 (CN); LIU, Hongwei, Baoding, Hebei 071000 (CN); ZHANG, Jian, Baoding, Hebei 071000 (CN); LI, Wei, Baoding, Hebei 071000 (CN); YANG, Kai, Baoding, Hebei 071000 (CN)
(74) Representative: dompatent von Kreisler Selting Werner - Partnerschaft von Patent- und Rechtsanwälten mbB
(86) International application number: PCT/CN2019/129282
(87) International publication number: WO 2020/135740

(56) References cited:
- EP-A1- 3 156 299
- WO-A1-2018/158873
- US-A1- 2017 131 401
- US-A1- 2018 170 388

## Description

### FIELD

The present invention relates to the technical field of automobile, and in particular to a lane-changing method and a lane-changing system for an autonomous vehicle, and a vehicle.

### BACKGROUND

An autonomous vehicle can realize automatic operation of the vehicle without any active operations of a human, in cooperating with a vision sensor, a lidar, a millimeter-wave radar, an ultrasonic radar, a monitoring device and a positioning system, thus to emancipate drivers from strenuous operations on a vehicle. By utilizing technologies such as computer, sensor, information fusion, communication, artificial intelligence and automatic control, the autonomous vehicle can plan a travel route of the vehicle in real time and arrive at a preset location.

The autonomous vehicle needs to change lanes during driving. In the conventional technology, whether the vehicle can change lanes is determined based on information such as speed and distance of surrounding vehicles or obstacles. Sometimes there will be a scene that, the vehicle changes a lane when a lane-changing condition is met, but due to changes in working conditions around the vehicle within a short time after the vehicle has changed a lane, the vehicle has a lane-changing intention again and needs to change lanes. At this time, frequent changing of lanes may affect vehicle safety.

US 2017/131401 A1 discloses a method for determining a state of a vehicle and assisting a driver in driving the vehicle. The vehicle includes a sensor for sensing another vehicle and determines the speed of the vehicle and determines a state in accordance with the sensing range of the sensor and the speed.

US 2018/170388 A1 discloses an autonomous driving control apparatus which includes an environment detector detecting vehicle information on one or more vehicles running in a target lane and a processor determining whether a possible lane-change area exists based on the vehicle information, determining a largest area among areas between target lane vehicles as a target lane-change area when the possible lane-change area does not exist, indicating an intention to change a lane to the target lane-change area to determine whether a target lane rear vehicle has a yield intention, and attempting to change the lane based on the determined result.

### SUMMARY

In view of this, the present invention aims to provide a lane-changing method for an autonomous vehicle. In the lane-changing method for the autonomous vehicle, object targets in different areas in front of the autonomous vehicle can be classified, and a virtual target is determined in extraction of the object targets in the forward area, so as to reduce the lane-changing frequency of the autonomous vehicle during driving. The vehicle with a lowest speed in an adjacent lane can be previewed in advance, thus to reduce unnecessary lane-changing operations of the autonomous vehicle, and thereby ensuring accurate target detection during the lane-changing of the autonomous vehicle, and improving driving safety.

To achieve the above objectives, technical solutions of the present d invention are as follows.

A lane-changing method for an autonomous vehicle includes: dividing multiple driving areas according to road information and a position of the autonomous vehicle, where the multiple driving areas include a forward area; obtaining speeds of multiple object targets in the forward area and distances from the multiple object targets to the autonomous vehicle; generating a virtual target according to a minimum speed of the obtained speeds of the plurality of object targets and a minimum distance of the obtained disatnces of the plurality of object targets, so as to determine whether to change a lane according to the virtual target.

Further, the multiple driving areas further include a side area, and the method further includes: obtaining horizontal distances and longitudinal distances from multiple object targets in the side area to the autonomous vehicle; and generating a virtual target according to a minimum horizontal distance and a minimum longitudinal distance, so as to determine whether to change a lane according to the virtual target.

Further, the multiple driving areas further include a back area, and the method further includes: obtaining risk levels of collisions between multiple object targets in the back area and the autonomous vehicle; and determining whether to change a lane according to an object target corresponding to a highest risk level.

Further, the risk level is determined by a collision time and a collision distance.

Further, the dividing multiple driving areas according to road information and a position of the autonomous vehicle includes: obtaining map information, and extracting the road information from the map information, where the road information includes lane line data; mapping the lane line data into a vehicle body coordinate system; and dividing the multiple driving areas according to a position of the autonomous vehicle in the vehicle body coordinate system.

In the lane-changing method for the autonomous vehicle, object targets in different areas in front of the autonomous vehicle can be classified, and a virtual target is determined in extraction of the object targets in the forward area, so as to reduce the lane-changing frequency of the autonomous vehicle during driving. The vehicle with a lowest speed in an adjacent lane can be previewed in advance, thus to reduce unnecessary lane-changing operations of the autonomous vehicle. The curvature, width, lane line type and other information of the current road are introduced in the dividing of driving areas, which can realize the accurate classification of object targets under the conditions of straight roads and curves with different curvatures, thereby ensuring accurate target detection during the lane-changing of the autonomous vehicle, and improving driving safety.

A second objective of the present invention is to propose a lane-changing system for an autonomous vehicle. In the lane-changing system for an autonomous vehicle, object targets in different areas in front of the autonomous vehicle can be classified, and a virtual target is determined in extraction of the object targets in the forward area, so as to reduce the lane-changing frequency of the autonomous vehicle during driving. The vehicle with a lowest speed in an adjacent lane can be previewed in advance, thus to reduce unnecessary lane-changing operations of the autonomous vehicle, and thereby ensuring accurate target detection during the lane-changing of the autonomous vehicle, and improving driving safety.

To achieve the above objective, the technical solutions of the present invention are as follows.

A lane-changing system for an autonomous vehicle includes: a division module, configured to divide multiple driving areas according to road information and a position of the autonomous vehicle, where the multiple driving areas include a forward area; a target selection module, configured to obtain speeds of a multiple object targets in the forward area, and distances from the multiple object targets in the forward area to the autonomous vehicle, and generate a virtual target according to a minimum speed of the obtained speeds of the plurality of object targets and a minimum distance of the obtained distances of the plurality of object targets; and a control module, configured to determine whether to change a lane according to the virtual target.

Further, the multiple driving areas further include a side area, and the target selection module is further configured to: obtain horizontal distances and longitudinal distances from multiple object targets in the side area to the autonomous vehicle; and generate a virtual target according to a minimum horizontal distance and a minimum longitudinal distance.

Further, the multiple driving areas further include a back area, and the target selection module is further configured to obtain risk levels of collisions between multiple object targets in the back area and the autonomous vehicle; and the control module is further configured to determine whether to change a lane according to an object target corresponding to a highest risk level.

Further, the division module is configured to obtain map information, and extract the road information from the map information, wherein the road information includes lane line data; map the lane line data into a vehicle body coordinate system; and divide the multiple driving areas according to a position of the autonomous vehicle in the vehicle body coordinate system.

The lane-changing system for an autonomous vehicle has the same advantageous effects as the above lane-changing method for an autonomous vehicle over the conventional technology, which is not described in detail herein.

A third objective of the present invention is to propose a vehicle. For the vehicle, object targets in different areas in front of the vehicle can be classified, and a virtual target is determined in extraction of the object targets in the forward area, so as to reduce the lane-changing frequency of the vehicle during driving. A vehicle with a lowest speed in an adjacent lane can be previewed in advance, thus to reduce unnecessary lane-changing operations of the vehicle, and thereby ensuring accurate target detection during the lane-changing of the autonomous vehicle, and improving driving safety.

To achieve the above objective, the technical solutions of the present invention are as follows.

A vehicle, provided with the lane-changing system for an autonomous vehicle according to any of the aforementioned embodiments.

The vehicle has the same advantageous effects as the above lane-changing system for an autonomous vehicle over the conventional technology, which is not described in detail herein.

A fourth objective of the present invention is to propose a computer-readable storage medium.

To achieve the above objective, the technical solutions of the present invention are as follows.

A computer-readable storage medium, stored with a lane-changing program for an autonomous vehicle. The lane-changing program for the autonomous vehicle, when being executed by a processor, implements the lane-changing method for an autonomous vehicle according to the first aspect described above.

### BRIEF DESCRIPTION OF THE DRAWINGS

The drawings constituting a part of the present invention are used to provide a further understanding of the present invention, and the exemplary embodiments and descriptions of the present invention are used to explain the present invention, and are not to limit the present invention.
Figure 1 is a flow chart of a lane-changing method for an autonomous vehicle according to an embodiment of the present invention;
Figure 2 is a schematic diagram in dividing driving areas in a lane-changing method for an autonomous vehicle according to an embodiment of the present invention;
Figure 3 is a schematic diagram in selecting a virtual target in a forward area in a lane-changing method for an autonomous vehicle according to an embodiment of the present invention;
Figure 4 is a schematic diagram in selecting a virtual target in a side area in a lane-changing method for an autonomous vehicle according to an embodiment of the present invention; and
Figure 5 is a block diagram of a lane-changing system for an autonomous vehicle according to an embodiment of the present invention.

### DETAILED DESCRIPTION OF EMBODIMENTS

It should be noted that, embodiments in the present invention and features in the embodiments may be combined with each other if there is no conflict.

The present invention will be described in detail in conjunction with the drawings and embodiments hereinafter.

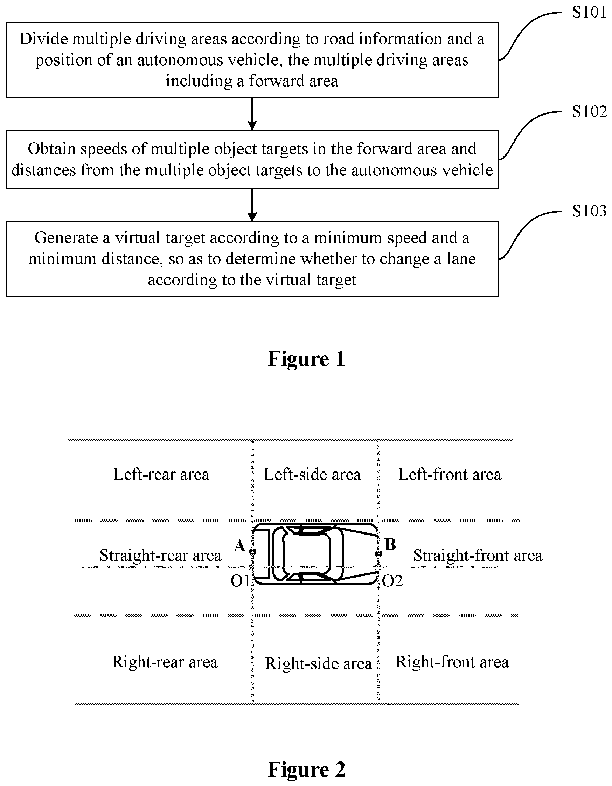

Figure 1 is a flow chart of a lane-changing method for an autonomous vehicle according to an embodiment of the present invention.

As shown in Figure 1 and in conjunction with Figure 2, the lane-changing method for an autonomous vehicle according to the embodiment of the present invention includes the following steps S101 to S103.

In step S101, multiple driving areas are divided according to road information and a position of an autonomous vehicle. The multiple driving areas include a forward area.

As shown in Figure 2, the forward area may include three areas corresponding to the left front, the straight front and the right front of the autonomous vehicle respectively, which are called as, for example, a left-front area, a straight-front area and a right-front area.

In other embodiments of the present invention, as shown in Figure 2, the multiple driving areas further include a side area and a back area. The side area includes two areas corresponding to the left side and the right side of the autonomous vehicle, which are called as, for example, a left-side area and a right-side area. The back area may include three areas corresponding to the left rear, the straight rear and the right rear of the autonomous vehicle, which are called as, for example, a left-rear area, a straight-rear area and a right-rear area.

Specifically, the step of dividing multiple driving areas according to road information and a positon of the autonomous vehicle includes the following steps. Map information is obtained, and the road information is extracted from the map information. The road information includes lane line data. The lane line data is mapped into a vehicle body coordinate system. The multiple driving areas are divided according to a position of the autonomous vehicle in the vehicle body coordinate system.

For example, the map information may include: a latitude and longitude of a discrete point of a lane line (the origin of the latitude and longitude is the center of the earth), a heading angle of the discrete point (taking the due north direction as 0°, and a clockwise direction as positive), a type of the lane line, a width of a lane, the number of lanes, a lane boundary, and the like. The lane line data is mapped to the vehicle body coordinate system through coordinate conversion, to provide lane line information of a road required during a lane-changing process of the autonomous vehicle, and map information of an object target in a detection area into different driving areas.

As shown in Figure 2, a center point A of a longitudinal axis of the front end of the autonomous vehicle and a center point B of a longitudinal axis of the rear end of the autonomous vehicle are respectively projected onto a center line of the current lane of the autonomous vehicle, to form two projection points O1 and O2. Two lines perpendicular to the current lane are made through the two projection points, and a current driving area of the autonomous vehicle is divided into eight different driving areas as shown in Figure 2. A driving area where an object target (e.g. other vehicle) is located is determined according to road data in the vehicle body coordinate system, and horizontal and longitudinal coordinate values of the object target in the vehicle body coordinate system.

In step S102, speeds of multiple object targets in the forward area, and distances from the multiple object targets in the forward area to the autonomous vehicle are obtained.

In step S103, a virtual target is generated according to a minimum speed and a minimum distance, so as to determine whether to change a lane according to the virtual target.

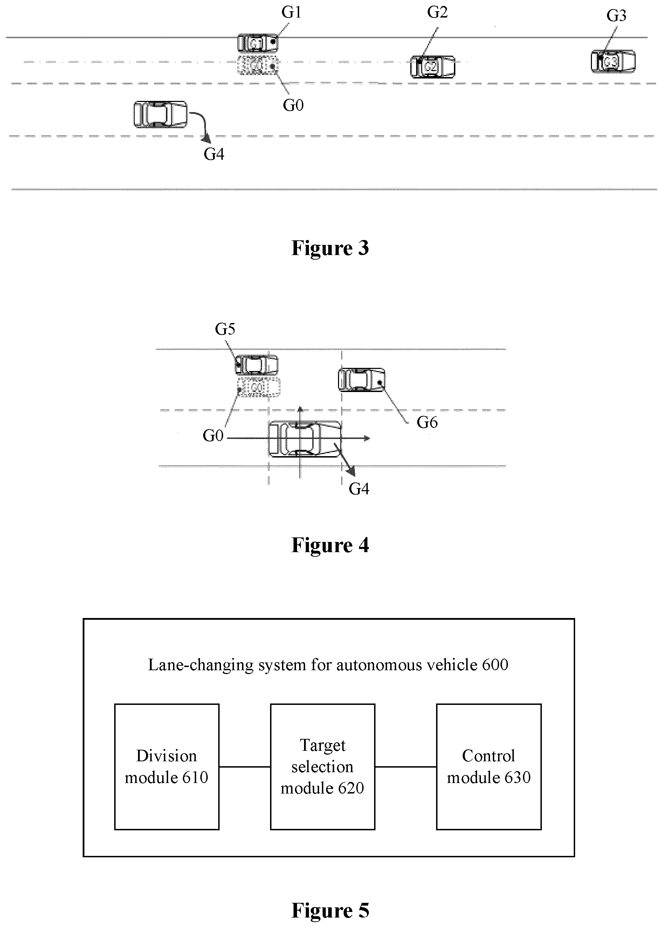

As shown in Figure 3, an object target in the forward area is taken as an example. Figure 3 shows object targets located in the left-front area of the autonomous vehicle. That is, there are three object targets in the left-front area, for example, object targets G1, G2 and G3. Firstly, the object targets G1, G2 and G3 in the left-front area are extracted. Then speeds of the object targets G1, G2, and G3 are arranged in an ascending order, to obtain a speed sequence Vely_Array1. Longitudinal distances from the object targets G1, G2 and G3 to the autonomous vehicle are arranged in an ascending order, to obtain a distance sequence Dis_Array1. A minimum speed in the speed sequence Vely_Array1 is extracted, and a minimum distance in the distance sequence Dis_Array1 is extracted. A virtual target G0 is determined according to the minimum speed and the minimum distance.

As an example, the speeds of the object targets G1, G2 and G3 are 100 kilometers/hour, 90 kilometers/hour and 95 kilometers/hour respectively, and the longitudinal distances from the object targets G1, G2 and G3 to the autonomous vehicle (that is, the autonomous vehicle G4) are 65 meters, 110 meters, and 160 meters respectively. Thus, a distance from the virtual target G0 to the autonomous vehicle G4 is 65 meters, and a speed of the virtual target is 90 kilometers/hour. Then, a TTC value is calculated for vehicle according to the virtual target G0. TTC means time to collision between the autonomous vehicle G4 and its front vehicle. The value of TTC is equal to a relative speed divided by a relative distance, and the relative speed is obtained by subtracting the speed of the front vehicle from the speed of the autonomous vehicle.

As shown in Figure 4, an object target in the side area is taken as an example. Horizontal distances and longitudinal distances from multiple object targets in the side area to the autonomous vehicle are obtained. A virtual target is generated according to a minimum horizontal distance and a minimum longitudinal distance, so as to determine whether to change a lane according to the virtual target.

As shown in Figure 4, object targets G5 and G6 in the left-side area are taken as an example. The object targets G5 and G6 in the left-side area are extracted. Then longitudinal distances from the object targets G5 and G6 to the autonomous vehicle (i.e., the autonomous vehicle G4) are arranged in an ascending order, to obtain a distance sequence Dis _Array2. Horizontal distances from the object targets G5 and G6 to the autonomous vehicle (i.e., the autonomous vehicle G4) are arranged in an ascending order, to obtain a distance sequence Dis _Array3. Then, a minimum longitudinal distance in the distance sequence Dis _Array2 is extracted, and a minimum horizontal distance in the distance sequence Dis _Array3 is extracted. A virtual target G0 is obtained according to the minimum longitudinal distance and the minimum horizontal distance.

As an example, the longitudinal distances from the object targets G5 and G6 to the autonomous vehicle are 2 meters and 3 meters respectively, and the horizontal distances from the object targets G5 and G6 to the autonomous vehicle are 2 meters and 1 meter respectively. Then the minimum horizontal distance is 1 meter, and the minimum longitudinal distance is 2 meters. Thus, the minimum horizontal distance from the virtual target G0 to the autonomous vehicle G4 is 1 meter, and the minimum longitudinal distance from the virtual target G0 to the autonomous vehicle G4 is 2 meters. In this embodiment, the longitudinal distance refers to a longitudinal distance to a center point of the autonomous vehicle.

An object target in the back area is taken as an example. Risk levels of collisions between multiple object targets in the back area and the autonomous vehicle are obtained; and it is to determine whether to change a lane according to an object target corresponding to a highest risk level. The risk level is determined by a collision time and a collision distance.

For selection of an object target in the left-rear area (or, straight-rear /right-rear) area, firstly, object targets (referred as targets) in the left-rear (or, straight-rear /right-rear) area are extracted. Then, it is to determine severities of influences of different targets on the driving of the autonomous vehicle, according to risk levels of vehicle driving conditions. The targets are ranked according to the risk levels. An object target with a highest risk level in the ranking is regarded as a final target. The risk level is determined by a collision time and a collision distance. The collision time is represented as TTC, which refers to time to collision between the autonomous vehicle and a front vehicle. The value of TTC is equal to a relative speed divided by a relative distance, and the relative speed is obtained by subtracting the speed of the autonomous vehicle from the speed of the back vehicle.

In order to provide a driver with sufficient reaction time, a recommended value of TTC is 2.5 seconds. A condition where the value of TTC is less than 2.5 seconds is a dangerous condition, and a condition where the value of TTC is greater than 2.5 seconds is a safe condition.

A distance between two vehicles should also be considered. If a speed difference between a back vehicle and the autonomous vehicle is not large, for example, a speed of the autonomous vehicle is 80 kilometers per hour and a speed of the back vehicle is 81 kilometers per hour, and a distance between the two vehicles is 3 meters. Then, the calculated TTC value is 10.8, but this condition is still very dangerous. Therefore, a safe distance may be set, such as 6 meters. At this time, although the value of TTC is greater than 2.5, the distance is less than 6 meters, and thus this condition is also a dangerous condition.

It should be noted that, if a speed of a back vehicle is greater than that of the autonomous vehicle, and the value of TTC is positive, a collision may occur. If the speed of the back vehicle is slower than that of the autonomous vehicle, and the value of TTC is negative, a collision will not occur. For example, it may be set a condition where the value of TTC is greater than 2.5 seconds and a relative distance is greater than 6 meters to be a safe condition, or otherwise, to be a dangerous condition.

In the lane-changing method for an autonomous vehicle according to the embodiments of the present invention, object targets in different areas such as forward area, side area and back area can be classified, and a virtual target is determined in extraction of the object targets in the forward area, so as to reduce the lane-changing frequency of the autonomous vehicle during driving. The vehicle with a lowest speed in an adjacent lane can be previewed in advance, thus to reduce unnecessary lane-changing operations of the autonomous vehicle. The curvature, width, lane line type and other information of the current road are introduced in the dividing of driving areas, which can realize the accurate classification of object targets under the conditions of straight roads and curves with different curvatures, thereby ensuring accurate target detection during the lane-changing of the autonomous vehicle, and improving driving safety.

Figure 5 is a block diagram of a lane-changing system for an autonomous vehicle according to an embodiment of the present invention.

As shown in Figure 5, the lane-changing system 600 for an autonomous vehicle according to the embodiment of the present invention includes: a division module 610, a target selection module 620, and a control module 630.

The division module 610 is configured to divide multiple driving areas according to road information and a position of the autonomous vehicle. The multiple driving areas include a forward area. The target selection module 620 is configured to obtain speeds of multiple object targets in the forward area, and distances from the multiple object targets in the forward area to the autonomous vehicle, and generate a virtual target according to a minimum speed and a minimum distance. The control module 630 is configured to determine whether to change a lane according to the virtual target.

In an embodiment of the present invention, the multiple driving areas further include a side area. The target selection module 620 is further configured to obtain horizontal distances and longitudinal distances from multiple object targets in the side area to the autonomous vehicle; and generate a virtual target according to a minimum horizontal distance and a minimum longitudinal distance.

In an embodiment of the present invention, the multiple driving areas further include a back area. The target selection module 620 is further configured to obtain risk levels of collisions between multiple object targets in the back area and the autonomous vehicle. The control module 630 is further configured to determine whether to change a lane according to an object target corresponding to a highest risk level.

In an embodiment of the present invention, the division module 610 is configured to obtain map information, and extract the road information from the map information. The road information includes lane line data. The division module 610 is configured to map the lane line data into a vehicle body coordinate system, and divide the multiple driving areas according to a position of the autonomous vehicle in the vehicle body coordinate system.

In the lane-changing system for an autonomous vehicle according to the embodiments of the present invention, object targets in different areas such as forward area, side area and back area can be classified, and a virtual target is determined in extraction of the object targets in the forward area, so as to reduce the lane-changing frequency of the autonomous vehicle during driving. The vehicle with a lowest speed in an adjacent lane can be previewed in advance, thus to reduce unnecessary lane-changing operations of the autonomous vehicle. The curvature, width, lane line type and other information of the current road are introduced in the dividing of driving areas, which can realize the accurate classification of object targets under the conditions of straight roads and curves with different curvatures, thereby ensuring accurate target detection during the lane-changing of the autonomous vehicle, and improving driving safety.

It should be noted that, specific implementation of the lane-changing system for an autonomous vehicle in the embodiment of the present invention is similar to that of the lane-changing method for an autonomous vehicle in the embodiment of the present invention. Reference may be made to description in the method embodiments, which will not described again herein for simplicity.

Further, a vehicle is proposed in an embodiment of the present invention. The vehicle is provided with the lane-changing system for an autonomous vehicle according to any of the aforementioned embodiments. For the vehicle, object targets in different areas such as forward area, side area and back area can be classified, and a virtual target is determined in extraction of the object targets in the forward area, so as to reduce the lane-changing frequency of the autonomous vehicle during driving. The vehicle with a lowest speed in an adjacent lane can be previewed in advance, thus to reduce unnecessary lane-changing operations of the autonomous vehicle. The curvature, width, lane line type and other information of the current road are introduced in the dividing of driving areas, which can realize the accurate classification of object targets under the conditions of straight roads and curves with different curvatures, thereby ensuring accurate target detection during the lane-changing of the autonomous vehicle, and improving driving safety.

In addition, other components and functions of the vehicle are known to those of ordinary skill in the art, and will not be described again herein for simplicity.

A computer-readable storage medium according to an embodiment of the present invention is stored with a lane-changing program for an autonomous vehicle. The lane-changing program for the autonomous vehicle, when being executed by a processor, implements the lane-changing method for an autonomous vehicle as described in any of the aforementioned embodiments of the present invention.

It should be noted that, logic and/or steps represented in the flow chart or described in other ways herein, for example, may be regarded as a sequence table of executable instructions for realizing logic functions, may be implemented in any computer-readable medium for use of instruction execution system, apparatus or device (e.g., computer-based system, system including processors, or other systems that can fetch and execute instructions from instruction execution system, apparatus or device), or may be used by combining the instruction execution system, apparatus or device. In terms of this specification, a "computer-readable medium" may be any apparatus that is capable of containing, storing, communicating, propagating, or transmitting a program, for use of an instruction execution system, apparatus or device or for use in combination with the instruction execution system, apparatus or device. The computer-readable medium includes but is not limited to: an electrical connection component (electronic device) with one or more wirings, a portable computer disk case (magnetic device), a random access memory (RAM), a read-only memory (ROM), an erasable and editable read-only memory (EPROM or flash memory), a fiber optic device, and a portable compact disk read-only memory (CDROM). Moreover, the computer-readable medium may even be a paper on which the program can be printed or other suitable medium, since an optical scanning may be performed on the paper or other medium, and then after edit, interpretation or, if necessary, processing in other suitable ways, the program can be electronically obtained, and then is stored in the computer memory.

It should be understood that, each part of the present invention may be implemented by hardware, software, firmware, or a combination thereof. In the aforementioned embodiments, multiple steps or methods may be implemented by software or firmware stored in a memory and executed by a suitable instruction execution system. For example, if it is implemented by hardware, as in another embodiment, it may be implemented by any one or a combination of the following technologies known in the art: a discrete logic circuit with a logic gate circuit having a logic function for data signal, an application specific integrated circuit with suitable combinational logic gate circuits, a programmable gate array (PGA), a field programmable gate array (FPGA), and the like.

Those of ordinary skill in the art may understand that, all or part of steps in the method of the aforementioned embodiments may be implemented by a program instructing relevant hardware. The program may be stored in a computer-readable storage medium. The program, when being executed, implements one step or a combination in the aforementioned method embodiment.

## Claims

1. A lane-changing method for an autonomous vehicle, comprising:
dividing a plurality of driving areas according to road information and a position of the autonomous vehicle, wherein the plurality of driving areas comprise a forward area;
obtaining speeds of a plurality of object targets in the forward area and distances from the plurality of object targets to the autonomous vehicle;
**characterized by**
generating a virtual target according to
a minimum speed of the obtained speeds of the plurality of object targets and
a minimum distance of the obtained distances of the plurality of object targets,
so as to determine whether to change a lane according to the virtual target.

2. The lane-changing method for an autonomous vehicle according to claim 1, wherein the plurality of driving areas further comprise a side area, and the method further comprises:
obtaining horizontal distances and longitudinal distances from a plurality of object targets in the side area to the autonomous vehicle; and
generating a virtual target according to
a minimum horizontal distance of the obtained horizontal distances and a minimum longitudinal distance of the obtained longitudinal distances,
so as to determine whether to change a lane according to the virtual target.

3. The lane-changing method for an autonomous vehicle according to claim 1, wherein the plurality of driving areas further comprise a back area, and the method further comprises:
obtaining risk levels of collisions between a plurality of object targets in the back area and the autonomous vehicle; and
determining whether to change a lane according to an object target corresponding to a highest risk level.

4. The lane-changing method for an autonomous vehicle according to claim 3, wherein the risk level is determined by a collision time and a collision distance.

5. The lane-changing method for an autonomous vehicle according to any of claims 1 to 4, wherein the dividing a plurality of driving areas according to road information and a position of the autonomous vehicle comprises:
obtaining map information, and extracting the road information from the map information, wherein the road information comprises lane line data;
mapping the lane line data into a vehicle body coordinate system; and
dividing the plurality of driving areas according to a position of the autonomous vehicle in the vehicle body coordinate system.

6. A lane-changing system for an autonomous vehicle, comprising:
a division module, configured to divide a plurality of driving areas according to road information and a position of the autonomous vehicle, wherein the plurality of driving areas comprise a forward area;
a target selection module, configured to obtain speeds of a plurality of object targets in the forward area, and distances from the plurality of object targets in the forward area to the autonomous vehicle,
**characterized in that** the target selection module is configured to
generate a virtual target according to a minimum speed of the obtained speeds of the plurality of object targets and a minimum distance of the obtained distances of the plurality of object targets; and
a control module, configured to determine whether to change a lane according to the virtual target.

7. The lane-changing system for an autonomous vehicle according to claim 6, wherein the plurality of driving areas further comprises a side area, and the target selection module is further configured to:
obtain horizontal distances and longitudinal distances from a plurality of object targets in the side area to the autonomous vehicle; and
generate a virtual target according to
a minimum horizontal distance of the obtained horizontal distances
and a minimum longitudinal distance of the obtained longitudinal distances.

8. The lane-changing system for an autonomous vehicle according to claim 6, wherein the plurality of driving areas further comprises a back area, and
the target selection module is further configured to obtain risk levels of collisions between a plurality of object targets in the back area and the autonomous vehicle; and
the control module is further configured to determine whether to change a lane according to an object target corresponding to a highest risk level.

9. The lane-changing system for an autonomous vehicle according to any one of claims 6 to 8, wherein the division module is configured to:
obtain map information, and extract the road information from the map information, wherein the road information comprises lane line data;
map the lane line data into a vehicle body coordinate system; and
divide the plurality of driving areas according to a position of the autonomous vehicle in the vehicle body coordinate system.

10. A vehicle, provided with the lane-changing system for an autonomous vehicle according to any of claims 6 to 9.

11. A computer-readable storage medium, on which a lane-changing program is stored for an autonomous vehicle, wherein the lane-changing program for the autonomous vehicle, when being executed by a processor, implements the lane-changing method for an autonomous vehicle according to any one of claims 1 to 5.

## Patentansprüche

1. Spurwechselverfahren für ein autonomes Fahrzeug, das umfasst:
Teilen einer Vielzahl von Fahrbereichen entsprechend Fahrbahninformationen und einer Position des autonomen Fahrzeugs, wobei die Vielzahl von Fahrbereichen einen vorderen Bereich umfassen;
Erhalten von Geschwindigkeiten einer Vielzahl von Zielobjekten in dem vorderen Bereich und Entfernungen von der Vielzahl von Zielobjekten zum autonomen Fahrzeug;
**gekennzeichnet durch**
Erzeugen eines virtuellen Ziels entsprechend
einer Mindestgeschwindigkeit der erhaltenen Geschwindigkeiten der Vielzahl von Zielobjekten, und
einer Mindestentfernung der erhaltenen Entfernungen der Vielzahl von Zielobjekten,
um zu bestimmen, ob eine Spur gewechselt werden soll, und zwar entsprechend dem virtuellen Ziel.

2. Spurwechselverfahren für ein autonomes Fahrzeug nach Anspruch 1, wobei die Vielzahl von Fahrbereichen ferner einen seitlichen Bereich umfassen, und wobei das Verfahren ferner umfasst:
Erhalten von Horizontalentfernungen und Längsentfernungen von einer Vielzahl von Zielobjekten in dem seitlichen Bereich zum autonomen Fahrzeug; und
Erzeugen eines virtuellen Ziels entsprechend
einer Mindesthorizontalentfernung der erhaltenen Horizontalentfernungen, und
einer Mindestlängsentfernung der erhaltenen Längsentfernungen,
um zu bestimmen, um eine Spur gewechselt werden soll, und zwar entsprechend dem virtuellen Ziel.

3. Spurwechselverfahren für ein autonomes Fahrzeug nach Anspruch 1, wobei die Vielzahl von Fahrbereichen ferner einen hinteren Bereich umfassen, und wobei das Verfahren ferner umfasst:
Erhalten von Risikostufen der Kollision zwischen einer Vielzahl von Zielobjekten in dem hinteren Bereich und dem autonomen Fahrzeug; und
Bestimmen, ob eine Spur gewechselt werden soll, und zwar entsprechend einem Zielobjekt, das einer höchsten Risikostufe entspricht.

4. Spurwechselverfahren für ein autonomes Fahrzeug nach Anspruch 3, wobei die Risikostufe mittels einer Kollisionszeit und eines Kollisionsabstands bestimmt wird.

5. Spurwechselverfahren für ein autonomes Fahrzeug nach einem der Ansprüche 1 bis 4, wobei das Teilen einer Vielzahl von Fahrbereichen entsprechend den Fahrbahninformationen und einer Position des autonomen Fahrzeugs umfasst:
Erhalten von Karteninformationen und Extrahieren der Fahrbahninformationen von den Karteninformationen, wobei die Fahrbahninformationen Spurliniendaten umfassen;
Abbilden der Spurliniendaten in ein Fahrzeugkarosserie-Koordinatensystem; und
Teilen der Vielzahl von Fahrbereichen entsprechend einer Position des autonomen Fahrzeugs in dem Fahrzeugkarosserie-Koordinatensystem.

6. Spurwechselsystem für ein autonomes Fahrzeug, das aufweist:
ein Teilungsmodul, das dazu ausgebildet ist, eine Vielzahl von Fahrzeugbereichen entsprechend Fahrbahninformationen und einer Position des autonomen Fahrzeugs zu teilen, wobei die Vielzahl von Fahrbereichen einen vorderen Bereich umfassen;
ein Zielauswahlmodul, das dazu ausgebildet ist, Geschwindigkeiten einer Vielzahl von Zielobjekten in dem vorderen Bereich und Entfernungen von der Vielzahl von Zielobjekten in dem vorderen Bereich zum autonomen Fahrzeug zu erhalten,
**dadurch gekennzeichnet, dass** das Zielauswahlmodul dazu ausgebildet ist, ein virtuelles Ziel zu erzeugen, und zwar entsprechend
einer Mindestgeschwindigkeit der erhaltenen Geschwindigkeiten der Vielzahl von Zielobjekten, und
einer Mindestentfernung der erhaltenen Entfernungen der Vielzahl von Zielobjekten; und
ein Steuermodul, das dazu ausgebildet ist, zu bestimmen, ob eine Spur gewechselt werden soll, und zwar entsprechend dem virtuellen Ziel.

7. Spurwechselsystem für ein autonomes Fahrzeug nach Anspruch 6, wobei die Vielzahl von Fahrbereichen ferner einen seitlichen Bereich umfassen, und wobei das Zielauswahlmodul ferner für Folgendes ausgebildet ist:
Erhalten von Horizontalentfernungen und Längsentfernungen von einer Vielzahl von Zielobjekten in dem seitlichen Bereich zum autonomen Fahrzeug; und
Erzeugen eines virtuellen Ziels entsprechend
einer Mindesthorizontalentfernung der erhaltenen Horizontalentfernungen, und
einer Mindestlängsentfernung der erhaltenen Längsentfernungen.

8. Spurwechselsystem für ein autonomes Fahrzeug nach Anspruch 6, wobei die Vielzahl von Fahrbereichen ferner einen hinteren Bereich umfassen, und
das Zielauswahlmodul ferner dazu ausgebildet ist, Risikostufen von Kollisionen zwischen einer Vielzahl von Zielobjekten in dem hinteren Bereich und dem autonomen Fahrzeug zu erhalten; und
das Steuermodul ferner dazu ausgebildet ist, zu bestimmen, ob eine Spur gewechselt werden soll, und zwar entsprechend einem Zielobjekt, das einer höchsten Risikostufe entspricht.

9. Spurwechselsystem für ein autonomes Fahrzeug nach einem der Ansprüche 6 bis 8, wobei das Teilungsmodul für Folgendes ausgebildet ist:
Erhalten von Karteninformationen und Extrahieren der Fahrbahninformationen von den Karteninformationen, wobei die Fahrbahninformationen Spurliniendaten umfassen;
Abbilden der Spurliniendaten in ein Fahrzeugkarosserie-Koordinatensystem; und
Teilen der Vielzahl von Fahrbereichen entsprechend einer Position des autonomen Fahrzeugs in dem Fahrzeugkarosserie-Koordinatensystem.

10. Fahrzeug, das mit dem Spurwechselsystem für ein autonomes Fahrzeug nach einem der Ansprüche 6 bis 9 versehen ist.

11. Computerlesbares Speichermedium, auf dem ein Spurwechselprogramm für ein autonomes Fahrzeug gespeichert ist, wobei das Spurwechselprogramm für das autonome Fahrzeug bei Ausführung durch einen Prozessor das Spurwechselverfahren für ein autonomes Fahrzeug nach einem der Ansprüche 1 bis 5 implementiert.

## Revendications

1. Procédé de changement de voie pour un véhicule autonome, comprenant :
la division d'une pluralité de zones de conduite en fonction d'informations routières et d'une position du véhicule autonome, dans lequel la pluralité de zones de conduite comprennent une zone avant ;
l'obtention de vitesses d'une pluralité d'objets cibles dans la zone avant et de distances de la pluralité d'objets cibles au véhicule autonome ;
**caractérisé par**
la génération d'une cible virtuelle en fonction
d'une vitesse minimale parmi les vitesses obtenues de la pluralité d'objets cibles et
d'une distance minimale parmi les distances obtenues de la pluralité d'objets cibles,
de façon à déterminer s'il faut changer de voie en fonction de la cible virtuelle.

2. Procédé de changement de voie pour un véhicule autonome selon la revendication 1, dans lequel la pluralité de zones de conduite comprennent en outre une zone latérale, et le procédé comprend en outre :
l'obtention de distances horizontales et de distances longitudinales d'une pluralité d'objets cibles dans la zone latérale au véhicule autonome ; et
la génération d'une cible virtuelle en fonction
d'une distance horizontale minimale parmi les distances horizontales obtenues
et d'une distance longitudinale minimale parmi les distances longitudinales obtenues,
de façon à déterminer s'il faut changer de voie en fonction de la cible virtuelle.

3. Procédé de changement de voie pour un véhicule autonome selon la revendication 1, dans lequel la pluralité de zones de conduite comprennent en outre une zone arrière, et le procédé comprend en outre :
l'obtention de niveaux de risque de collision entre une pluralité d'objets cibles dans la zone arrière et le véhicule autonome ; et
le fait de déterminer s'il faut changer de voie en fonction d'un objet cible correspondant au niveau de risque le plus élevé.

4. Procédé de changement de voie pour un véhicule autonome selon la revendication 3, dans lequel le niveau de risque est déterminé par un temps de collision et une distance de collision.

5. Procédé de changement de voie pour un véhicule autonome selon l'une quelconque des revendications 1 à 4, dans lequel la division d'une pluralité de zones de conduite en fonction d'informations routières et d'une position du véhicule autonome comprend :
l'obtention d'informations cartographiques, et l'extraction d'informations routières à partir des informations cartographiques, dans lequel les informations routières comprennent des données de lignes de délimitation de voies ;
le mappage des données de lignes de délimitation des voies dans un système de coordonnées du corps de véhicule ; et
la division de la pluralité de zones de conduite en fonction d'une position du véhicule autonome dans le système de coordonnées du corps de véhicule.

6. Système de changement de voie pour un véhicule autonome, comprenant :
un module de division, configuré pour diviser une pluralité de zones de conduite en fonction d'informations routières et d'une position du véhicule autonome, dans lequel la pluralité de zones de conduite comprennent une zone avant ;
un module de sélection de cible, configuré pour obtenir des vitesses d'une pluralité d'objets cibles dans la zone avant, et des distances de la pluralité d'objets cibles dans la zone avant au véhicule autonome,
**caractérisé en ce que** le module de sélection de cible est configuré pour générer une cible virtuelle en fonction
d'une vitesse minimale parmi les vitesses obtenues de la pluralité d'objets cibles et
d'une distance minimale parmi les distances obtenues de la pluralité d'objets cibles ; et
un module de commande, configuré pour déterminer s'il faut changer de voie en fonction de la cible virtuelle.

7. Système de changement de voie pour un véhicule autonome selon la revendication 6, dans lequel la pluralité de zones de conduite comprennent en outre une zone latérale, et le module de sélection de cible est en outre configuré pour :
obtenir des distances horizontales et des distances longitudinales d'une pluralité d'objets cibles dans la zone latérale au véhicule autonome ; et
générer une cible virtuelle en fonction
d'une distance horizontale minimale parmi les distances horizontales obtenues
et d'une distance longitudinale minimale parmi les distances longitudinales obtenues.

8. Système de changement de voie pour un véhicule autonome selon la revendication 6, dans lequel la pluralité de zones de conduite comprennent en outre une zone arrière, et
le module de sélection de cible est en outre configuré pour obtenir des niveaux de risque de collision entre une pluralité d'objets cibles dans la zone arrière et le véhicule autonome ; et
le module de commande est en outre configuré pour déterminer s'il faut changer de voie en fonction d'un objet cible correspondant au niveau de risque le plus élevé.

9. Système de changement de voie pour un véhicule autonome selon l'une quelconque des revendications 6 à 8, dans lequel le module de division est configuré pour :
obtenir des informations cartographiques, et extraire les informations routières à partir des informations cartographiques, dans lequel les informations routières comprennent des données de lignes de délimitation des voies ;
cartographier les données de lignes de délimitation des voies dans un système de coordonnées du corps de véhicule ; et
diviser la pluralité de zones de conduite en fonction d'une position du véhicule autonome dans le système de coordonnées du corps de véhicule.

10. Véhicule, pourvu du système de changement de voie pour un véhicule autonome selon l'une quelconque des revendications 6 à 9.

11. Support de stockage lisible par ordinateur, sur lequel est stocké un programme de changement de voie pour un véhicule autonome, dans lequel le programme de changement de voie pour le véhicule autonome, lorsqu'il est exécuté par un processeur, met en oeuvre le procédé de changement de voie pour un véhicule autonome selon l'une quelconque des revendications 1 à 5.
